# EUROPEAN PATENT SPECIFICATION

(11) **EP 4 250 664 B1**
(45) Date of publication and mention of the grant of the patent: **23.09.2026**
(21) Application number: 22209369.2
(22) Date of filing: 24.11.2022
(51) Int. Cl.: H04L 41/16

(54) **COMMUNICATION RELATED TO FEDERATED LEARNING**
KOMMUNIKATION IM ZUSAMMENHANG MIT FÖDERIERTEM LERNEN
COMMUNICATION LIÉE À UN APPRENTISSAGE FÉDÉRÉ

(30) Priority: 25.03.2022 US 202263323509 P
(43) Date of publication of application: 27.09.2023
(60) Divisional application: 26199238.2
(73) Proprietor: LG Electronics Inc., Yeongdeungpo-gu Seoul 07336 (KR)
(72) Inventor: KIM, Jaewoo, Seoul 06772 (KR); KIM, Hyunsook, Seoul 06772 (KR); KIM, Laeyoung, Seoul 06772 (KR); YOUN, Myungjune, Seoul 06772 (KR)
(74) Representative: Frenkel, Matthias Alexander

(56) References cited:
- "3rd Generation Partnership Project; Technical Specification Group Services and System Aspects; Study on 5G System Support for AI/ML-based Services (Release 18)", no. V0.1.0, 4 March 2022 (2022-03-04), pages 1 - 12, XP052144380, Retrieved from the Internet <URL:https://ftp.3gpp.org/Specs/archive/23_series/23.700-80/23700-80-010.zip 23700-80-010_rm.doc> [retrieved on 20220304]
- OPPO: "5GS Assisted AIML Services and Transmissions (FS_5GAIML)", vol. SA WG2, no. Electronic meeting; 20210517 - 20210528, 10 May 2021 (2021-05-10), XP052004131, Retrieved from the Internet <URL:https://ftp.3gpp.org/tsg_sa/WG2_Arch/TSGS2_145E_Electronic_2021-05/Docs/S2-2103759.zip S2-2103759 5GS Assisted AIML Services and Transmissions - final.pptx> [retrieved on 20210510]
- LG ELECTRONICS: "KI#7, New Sol: Providing 5GS Assistance information to AF for Federated Learning Operation", vol. SA WG2, no. e-meeting ;20220406 - 20220412, 29 March 2022 (2022-03-29), XP052133254, Retrieved from the Internet <URL:https://ftp.3gpp.org/tsg_sa/WG2_Arch/TSGS2_150E_Electronic_2022-04/Docs/S2-2202412.zip S2-2202412_AIMLsys_KI#7_solution_AIML_NF.docx> [retrieved on 20220329]
- APOSTOLOS KOUSARIDAS ET AL: "QoS Prediction for 5G Connected and Automated Driving", ARXIV.ORG, CORNELL UNIVERSITY LIBRARY, 201 OLIN LIBRARY CORNELL UNIVERSITY ITHACA, NY 14853, 11 July 2021 (2021-07-11), XP091010967

## Description

### TECHNICAL FIELD

The present disclosure relates to mobile communication.

### Background

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Meanwhile 5G plans to support Artificial Intelligence (AI)/Machine Learning (ML) based services are under discussion. An Application Function (AF) such as an Application Server (AS) may perform a Federated Learning (FL) operation. However, in the prior art, there was no method for the 5G System (5GS) to support the AF to perform the FL operation. For example, a specific method for 5GS to provide such AF with assistance information for FL operation has not been discussed at all. Also, there was no discussion about how AF requests assistance information for FL operation from 5GS.
Prior art can be found, for example, in 3GPP TR 23.700-80 v0.1.0 (2022-02), which relates to "3rd Generation Partnership Project; Technical Specification Group Services and System Aspects; Study on 5G System Support for AI/ML-based Services (Release 18)", and in Oppo, 3GPP Draft, S2-2103759, which relates to "5GS Assisted AIML Services and Transmissions (FS_5GAIML)".

### SUMMARY

Accordingly, a disclosure of the present specification has been made in an effort to solve the aforementioned problem. The invention is set out in the appended claims.

In order to perform FL-related communication, the AS transmits a request message for requesting assistance information to the NF node and receives a response message including assistance information from the NF node. The AS determines a time to perform the FL operation based on the derived assistance information and then performs the FL operation based on this derived assistance information.

The NF node which is not part of the present invention may receive a request message requesting assistance information from the AS, and may request analytics from the NWDAF. The NF node may derive assistance information based on the analytics and transmit the derived assistance information to the AS.

According to the disclosure of the present specification, it is possible to solve the problems of the related art.

For example, 5GS can effectively support the FL operation of AF (or AS).

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 shows an example of a 5G system architecture to which the implementation of the present specification is applied.
FIG. 5 shows an example of split AI/ML according to an embodiment of the disclosure of the present specification.
FIG. 6 shows an example of AI/ML model deployment according to an embodiment of the disclosure of the present specification.
FIG. 7 shows an example of AI/ML model deployment according to an embodiment of the disclosure of the present specification.
FIG. 8 shows a first example of providing 5GS assistance information according to an embodiment of the disclosure of the present specification.
FIG. 9 shows a second example of providing 5GS assistance information according to an embodiment of the disclosure of the present specification.
FIG. 10 shows an example of an operation according to an embodiment of the disclosure of the present specification.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

Although not limited thereto, various descriptions, functions, procedures, proposals, methods, and/or operation flowcharts disclosed herein may be applied to various fields requiring wireless communication and/or connection (e.g., 5G) between devices.

### I. Techniques and procedures applicable to the disclosure of the present specification

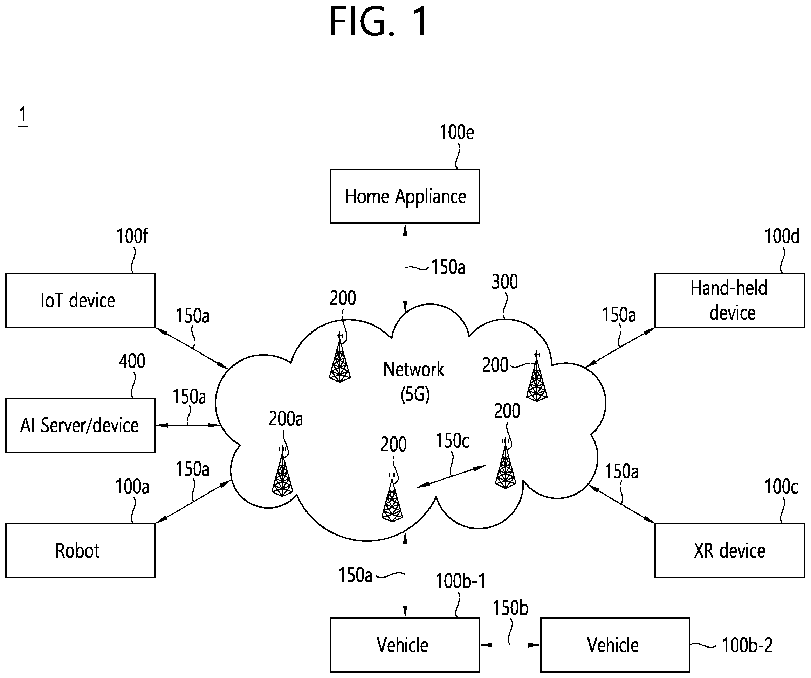

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

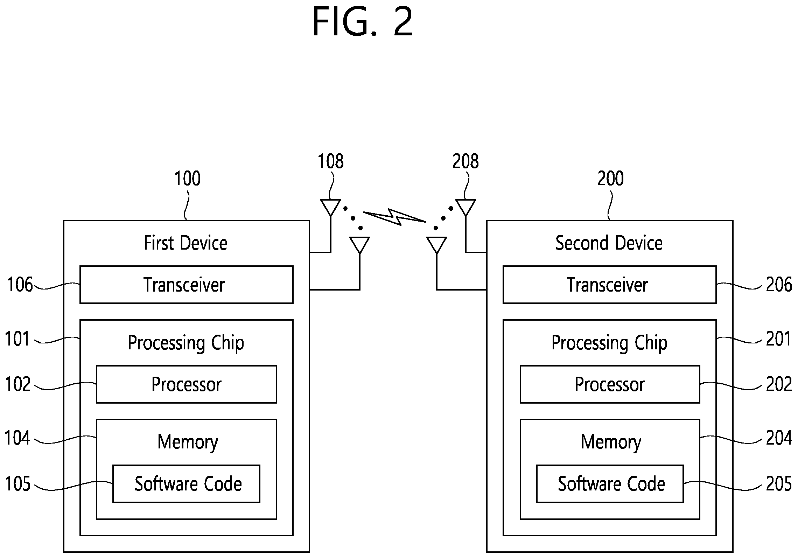

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

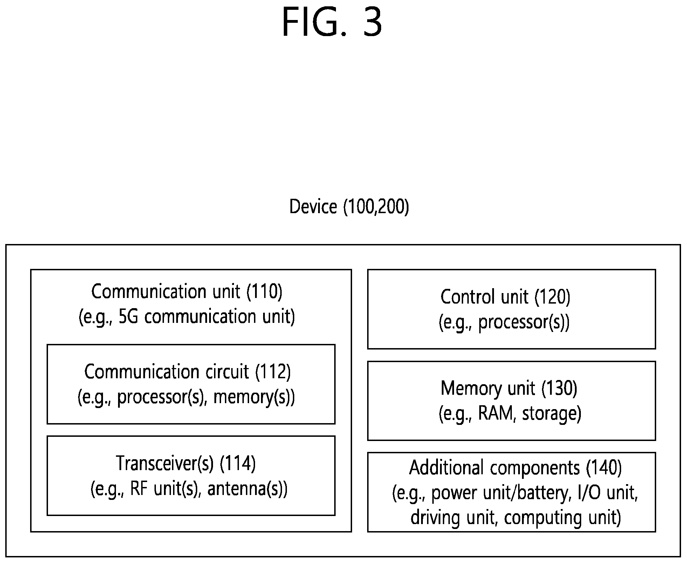

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

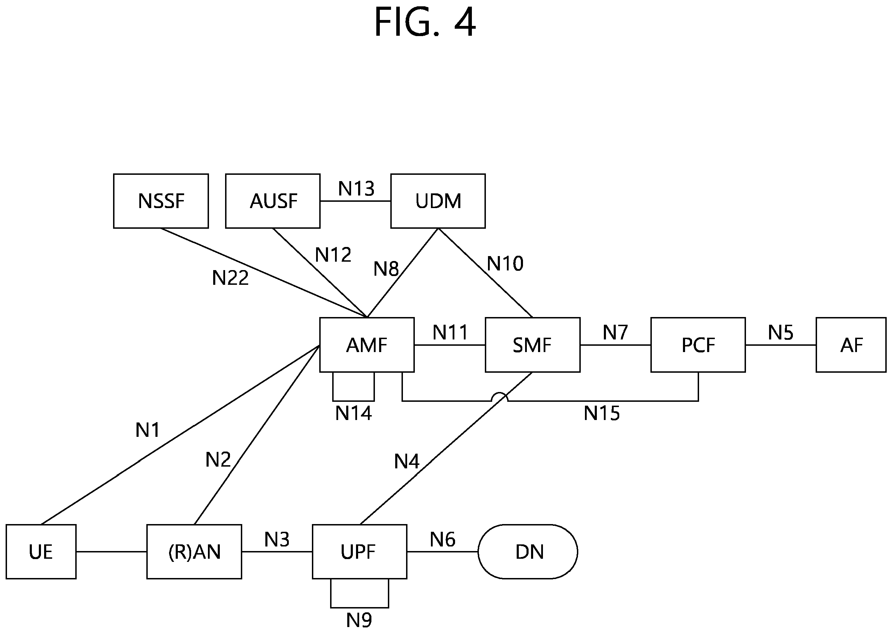

**FIG. 4** **shows an example of a 5G system architecture to which the implementation of the present specification is applied.**

The 5G system (5GS; 5G system) structure consists of the following network functions (NFs).
- AUSF (Authentication Server Function)
- AMF (Access and Mobility Management Function)
- DN (Data Network), e.g. operator services, internet access or third-party services
- USDF (Unstructured Data Storage Function)
- NEF (Network Exposure Function)
- I-NEF (Intermediate NEF)
- NRF (Network Repository Function)
   - NSSF (Network Slice Selection Function)
   - PCF (Policy Control Function)
   - SMF (Session Management Function)
   - UDM (Unified Data Management)
   - UDR (Unified Data Repository)
   - UPF (User Plane Function)
   - UCMF (UE radio Capability Management Function)
   - AF (Application Function)
   - UE (User Equipment)
   - (R)AN ((Radio) Access Network)
   - 5G-EIR (5G-Equipment Identity Register)
   - NWDAF (Network Data Analytics Function)
   - CHF (Charging Function)
      In addition, the following network functions may be considered.
   - N3IWF (Non-3GPP InterWorking Function)
   - TNGF (Trusted Non-3GPP Gateway Function)
   - W-AGF (Wireline Access Gateway Function)

FIG. 4 shows the 5G system structure of a non-roaming case using a reference point representation that shows how various network functions interact with each other.

In FIG. 4, UDSF, NEF and NRF are not described for clarity of the point-to-point diagram. However, all network functions shown can interact with UDSF, UDR, NEF and NRF as needed.

For clarity, the connection between the UDR and other NFs (e.g. PCFs) is not shown in FIG. 4. For clarity, the connection between NWDAF and other NFs (e.g. PCFs) is not shown in FIG. 4.

For reference, descriptions of the reference points shown in FIG. 4 are as follows.

N1 represents Reference point between UE and AMF.

N2 represents Reference point between NG-RAN and AMF.

N3 represents Reference point between NG-RAN and UPF.

N4 represents Reference point between SMF and UPF.

N5 represents Reference point between PCF and AF.

N6 represents Reference point between UPF and DN.

N7 represents Reference point between SMF and PCF.

N8 represents Reference point between UDM and AMF.

N9 represents Reference point between UPFs.

N10 represents Reference point between UDM and SMF.

N11 represents Reference point between AMF and SMF.

N12 represents Reference point between AMF and AUSF.

N13 represents Reference point between UDM and AUSF.

N14 represents Reference point between AMFs.

N15 represents Reference point between PCF and AMF in a non-roaming scenario and reference point between AMF and PCF of visited network in roaming scenario.

N16 represents Reference point between SMFs.

N22 represents Reference point between AMF and NSSF.

N30 represents Reference point between PCF and NEF.

N33 represents Reference point between AF and NEF.

In some cases, it may be necessary to connect two NFs to each other to service the UE.

### <Network data analytics>

To support an enabler for network automation, ways to improve the performance of the 5GS system are being discussed.

For 5GS system enhancement, for example, it may be necessary to further investigate system enhancement for Network Data Analytics Function (NWDAF). Through system enhancements to NWDAF, 5GS can support network automation.

Here, the NWDAF may be a network node that provides network analytics information according to a request of another network node (another NF). For example, the NWDAF may generate analytics information based on communication-related information (e.g., information related to a load level of a specific network slice). The NWDAF may provide analytics information such as statistical information or prediction information to other network nodes (other NFs) in order to utilize data provided by the UE or other network nodes.

Research related to network data analytics may focus on data analytics for 5GC NF (Network Function) (e.g., data analytics to support decision-making of 5GC NF). Alternatively, research related to network data analytics may focus on supporting application-related analytics, UE-related analytics, and session-related analytics. In relation to network data analytics, research on inputs to NWDAF and outputs of NWDAF may be conducted. Potential improvements and new scenarios for network data analytics can be studied.

As an input for the NWDAF to generate the data analytics, data from a UE or data from a network node (e.g., SMF) may be used. In order for 5GS to support NWDAF collecting and utilizing data provided from UEs (or network nodes), ways to enhance 5GS may be discussed. 5GS may be enhanced to provide the NWDAF with input information for generating analytics information. This analytics information can be used by other NFs (e.g., non-NWDAF network nodes).

When a network enhancement is envisioned based on the data of the UE (or network node) provided to the NWDAF, problems such as the following examples can be studied:
- What type of information from the UE could be collected by the network (e.g. NWDAF) as input for analytics generation?
- What types of analytics information could be provided by NWDAF to other NFs to leverage the data provided by the UE?
- How frequently such data provided by the UE are to be shared with the NWDAF?
- What are the triggers for the UE to provide data to the NWDAF as input for analytics?
- How to ensure the integrity and Operator-level accessibility of UE-provided information in order to avoid using misleading or untrusted information in the network?
- Whether there are privacy aspects that need to be considered, i.e. related to the information provided by the UE? If so, how to ensure privacy on collection and utilisation of UE data?
- How the NWDAF collects the UE's information (the method of collection of data)?

The network may guarantee privacy, integrity, and operator-level accessibility of data provided by the UE.

NWDAF may provide statistics or prediction information to the UE or other NFs to utilize the data provided by it.

There may not be a direct interface between the UE and the NWDAF.

### <Artificial Intelligence (AI)/Machine Learning (ML) based service>

In 3GPP, a plan to support AL/ML-based services in 5GS is being discussed.

For example, with 5GS assistance, mtehods are being discussed to enable AI/ML services and transport to support AI/ML model distribution, transfer, and training for various applications. For example, various applications may include image/voice recognition, robot control, automobiles, and the like.

AI/ML operations can include, for example, three main types:
- AI/ML operation splitting between AI/ML endpoints
- AI/ML model/data distribution and sharing over 5G system
- Distributed/Federated Learning (FL) over 5G system

In order to provide intelligent transmission support for application layer AI/ML tasks, the following examples below illustrate the goals of how AI/ML service providers can utilize 5GS as a platform.
1. Objective 1: Study possible architecture and functional extensions to support application-layer AI/ML tasks.
   a. To support Application AI/ML operation together with AI/ML model providers, it supports monitoring network resource utilization in 5G systems related to UEs.
   b. 5GS information exposure extensions to 5GC NF(s) to expose UE and/or network health and performance predictions (e.g. location, QoS, load, congestion, etc.). Support whether and how to expose this information to the UE and/or authorized third parties to support application AI/ML operation.
   c. Enhancements of external parameter provisioning for 5GC based on application AI/ML operation (e.g. expected UE activity behaviors, expected UE mobility, etc.).
   d. Investigate enhancements to other 5GC features that can be used to support application AI/ML operations.
2. Objective 2: Study possible QoS and policy enhancements to support application AI/ML operational traffic while supporting normal (non-application AI/ML) 5GS user traffic.
3. Objective 3: Study whether and how 5GS provides assistance to AF and the UE for the AF and UE to manage the FL operation and model distribution/redistribution (i.e. FL members selection, group performance monitoring, adequate network resources allocation and guarantee.). In order to to facilitate collaborative Application AI/ML based Federated Learning operation between the application clients running on the UEs and the Application Servers, these studies can be conducted.

All UEs participating in a given Application AI/ML task can receive service by the same S-NSSAI as AF.

The following examples are examples of three main AI/ML operations.

Artificial intelligence (AI)/machine learning (ML) is being used in a variety of applications across industries. In mobile communication systems, mobile devices (e.g. smartphones, cars, robots) are increasingly replacing traditional algorithms (e.g. speech recognition, image recognition, video processing) with AI/ML models to enable applications.

A 5G system can support at least three types of AI/ML tasks. The examples below represent three types of AI/ML tasks:
- AI/ML operation splitting between AI/ML endpoints;
- AI/ML model/data distribution and sharing over 5G system;
- Distributed/Federated Learning over 5G system;

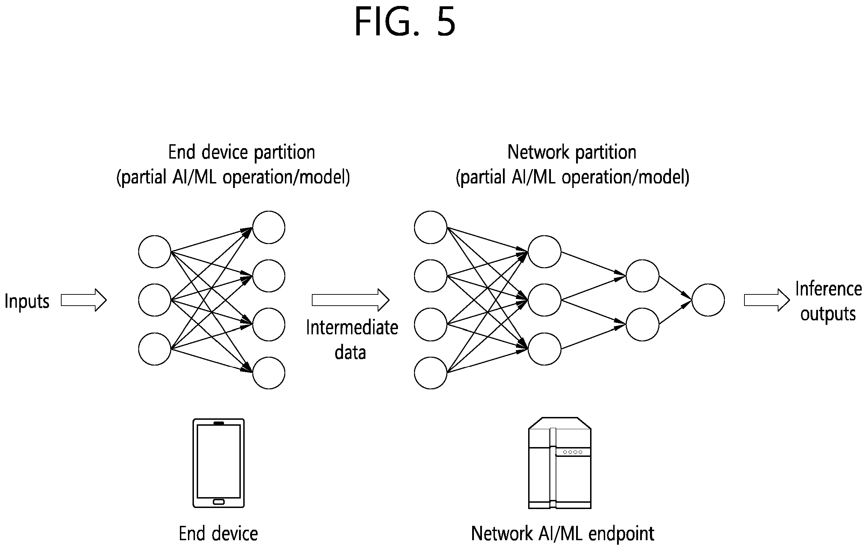

The example of FIG. 5 shows an example of AI/ML job splitting between AI/ML endpoints.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 5 shows an example of split AI/ML according to an embodiment of the disclosure of the present specification.

A split AI/ML inference method may be represented as shown in FIG. 5. The AI/ML job/model is split into several parts depending on the current job and environment. The computation-intensive and energy-intensive parts can be offloaded to the network endpoint, while the privacy-sensitive and latency-sensitive parts can be left on the end device. A device can execute a task/model up to a specific part/layer and then transmit intermediate data to a network endpoint. The network endpoint can execute the rest of the parts/layers and feed the inference results back to the device.

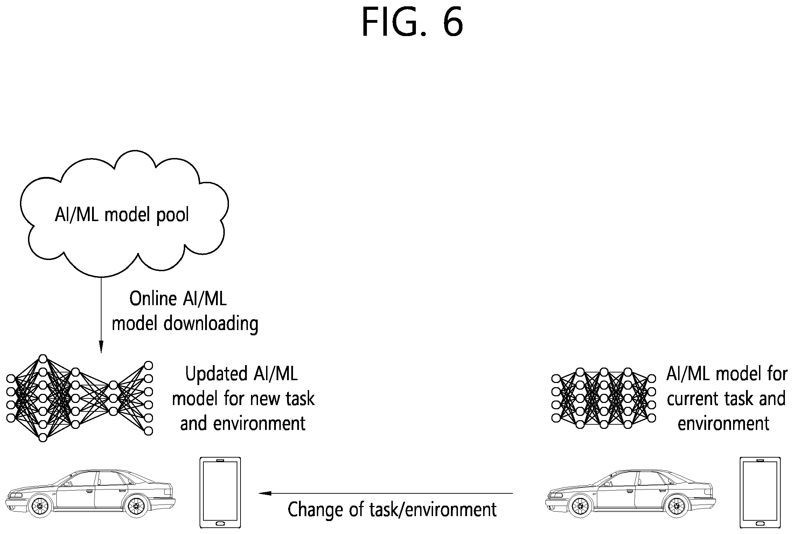

The example in FIG. 6 shows an example of AI/ML model/data distribution and sharing via a 5G system.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 6** **shows an example of AI/ML model deployment according to an embodiment of the disclosure of the present specification.**

The AI/ML model distribution method may be represented as shown in FIG. 6. Multi-functional mobile terminals may need to switch AI/ML models as jobs and environments change. A condition of the adaptive model selection may be that the model to be selected is available for the mobile device. However, due to the fact that AI/ML models are becoming increasingly diverse and the UE's limited storage resources, it may be decided not to preload all candidate AI/ML models onboard. Online model deployment (i.e., downloading new models) may be required, through which AI/ML models can be deployed from NW endpoints to devices as needed to adapt to changed AI/ML tasks and environments. For this, it may be necessary to continuously monitor the model performance at the UE.

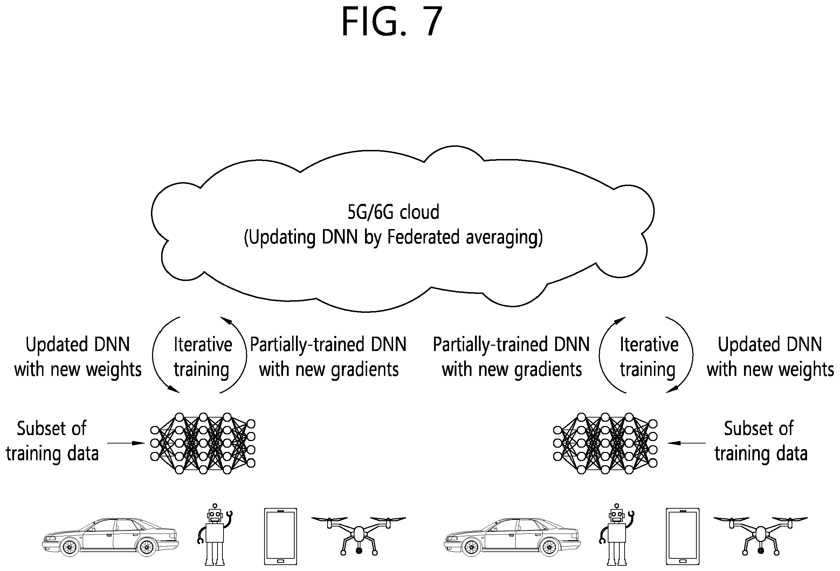

The example of FIG. 7 shows an example of distributed/federated learning through a 5G system.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 7** **shows an example of AI/ML model deployment according to an embodiment of the disclosure of the present specification.**

An example of a system of Federated Learning (FL) may be depicted as shown in FIG. 7 .

The cloud server can train the global model by aggregating the partially trained local model on each end device. Within each training iteration, the UE can perform training based on the model downloaded from the AI server, using local training data. Then, the UE may report the intermediate training result to the cloud server through the 5G UL channel. The server may aggregate the intermediate training results of the UE and update the global model. Then the updated global model is deployed back to the UE and the UE can perform training for the next iteration.

### II. Disclosure of the present specification

The disclosures described below in this specification may be implemented in one or more combinations (e.g., a combination including at least one of the contents described below). Each of the drawings shows an embodiment of each disclosure, but the embodiments of the drawings may be implemented in combination with each other.

The description of the method proposed in the disclosure of the present specification may consist of a combination of one or more operations/configurations/steps described below. The following methods described below may be performed or used in combination or complementary.

For FL operation, support of 5GS may be discussed. That is, 5GS assistance to Federated Learning Operation for FL operation may be discussed.

Meanwhile 5G plans to support Artificial Intelligence (AI)/Machine Learning (ML) based services are under discussion. An Application Function (AF) such as an Application Server (AS) may perform a Federated Learning (FL) operation. However, in the prior art, there was no method for the 5G System (5GS) to support the AF to perform the FL operation. For example, a specific method for 5GS to provide such AF with assistance information for FL operation has not been discussed at all. Also, there was no discussion about how AF requests assistance information for FL operation from 5GS.

For example, in order for 5GS to support AF selecting a UE for FL operation, a method of providing assistance information needs to be discussed. Also, it is necessary to discuss what information 5GS will receive from AF and what information 5GS will provide to AF. In addition, in order for 5GS to support the FL operation of AI/ML applications, a method for 5GS to collect information within 5GS according to the request of the application (e.g. preferred time zone for performing FL operations, area for FL operations), and to provide assistance information such as a list of candidate UEs for FL operation and a recommended time period for FL operation to AF needs to be discussed.

To manage FL operations and model distribution/redistribution (i.e. FL member selection, group performance monitoring, and appropriate network resource allocation and assurance), whether and how AF and/or UE 5GS provides support to AF and UE may be discussed. For reference, in various descriptions of the disclosure of the present specification, AF may be used as a term synonymous with Application Server (AS). Through this, it is possible to facilitate a collaborative application AI/ML based Federated Learning operation between an application client and an application server excecuting on the UE.

To support AF and FL operation to UE, the following examples may be discussed:
UE selection support for FL operation may be discussed. For example, to help AF select and manage a group of UEs to be part of an FL operation, whether 5GC can provide AF, methods and information may be discussed. For reference, AF may control and manage FL group management. For example, in order to select and manage a group of UEs to be part of the FL operation, it may be discussed whether information is needed for 5GC to support AF, how information is needed, and what information is needed;
Performance monitoring/exposure may be discussed. For example, a method for monitoring and exposing UE or UE group performance (e.g. aggregated QoS parameters) related to FL operation may be discussed. For example, in order to capture specific system performance and predictions for traffic related to AI/ML operations for FL operations, whether an existing monitoring event or a new monitoring event (e.g. QoS, location, load, congestion) is needed and which events are required can be discussed.

FL performance can be discussed. For example, when the application server receives local ML model training information from another UE to perform global model update, a method (e.g., latency divergence management) to support AF to improve FL performance between UEs may be discussed.

There may be a need for a method to assist the FL operation of AI/ML applications in 5GS. For example, for this, there may be a need for a method in which 5GS can provide information such as a list of suitable FL candidate UEs or a recommended FL time zone, by collecting information in 5GS according to the application's request (e.g., preferred FL operation time zone, region for FL operation).

A method described in the disclosure of this specification (egg, a method of providing 5GS assistance information to AF to support AI and ML services) may consist of a combination of one or more operations/configurations/steps of the following examples.

In this specification, AI/ML service may be used as a term with the same meaning as AI/ML-based service, AI/ML traffic, AI/ML application, AI/ML transmission, AI/ML operation, AI/ML operational traffic, Application AI/ML operation, Application AI/ML operational traffic, and the like.

In the present disclosure, user equipment (UE) and a terminal may be used as terms having the same meaning.

In the present disclosure, AF (Application Function) and AS (Application Server) may be used as terms having the same meaning.

In this specification, analytics information may be used as a term with the same meaning as analytics data, network analytics data, and network analytics information.

This specification describes the contents proposed in various examples. For network data analytics, refer to TS 23.288 v17.3.0.

In the disclosure of this specification, an example of a scheme for providing 5GS assistance information to an AF (e.g., AS) for FL operation will be described.

In various examples of the disclosure of the present specification, for FL operation, for 5GS to provide 5GS assistance information to AF, various schemes may be proposed, such as the following examples:
- AIML NF, a new NF supported by NEF and used for external exposure to support 5G AIML service, may be introduced. For example, such an NF may receive a request from an AF (i.e., AI/ML Application Server) and respond by sending 5GS assistance information for FL operation.
- A dedicated NEF may be deployed to provide only AIML NF functions. For example, an AIML FL operation specific function/Application Programming Interface (API) and NEF function/API designated for function exposure to an AI/ML application server may be supported.
- AI/ML Application Server can request assistance information for FL operation. For example, assistance information may include UE list, QoS reference, geographic area, minimum number of UEs for FL operation, preferred FL time period, whether to request a list of candidate UEs for FL operation, preferred time period for FL operation and the like. For example, some FL operations may need to be performed for a specific time period or some FL operations may not need to be performed immediately. In this case, the AI/ML Application Server may provide a preferred FL operation period. AI/ML Application Server can also provide estimated FL uptime based on training data size. For the FL operation that considers the preferred time period and the expected FL operation time and predicts the network state such as user data congestion time, AIML NF/NEF may derive a recommended time period. For reference, AIML NF/NEF may mean AIML NF and/or NEF. For example, AIML NF/NEF may mean AIML NF or NEF. Alternatively, AIML NF/NEF may refer to NEF and AIML NF in a situation in which NEF and AIML NF are included in 5GS together.
- AIML NF/NEF may interact with other NFs such as NWDAF and UDM to process requests from AI/ML Application Server. AIML NF / NEF generates assistance information (e.g., lists of candidate UEs for recommended time periods) for FL operation based on the collected information, AIML NF/NEF may provide assistance information for FL operation requested by AI/ML Application Server.

In the disclosure of this specification, a new Nnef service operation (e.g., Nnef_FLAssistanceInfo_Request) is proposed. Alternatively, instead of a new operation, an existing Nnef service operation may be extended and used.

AI/ML Application Server may request 5GS assistance information from AIML NF in the same way as one-time reporting. For example, AI/ML Application Server may request AIML NF to report 5GS assistance information.

AI/ML Application Server may request 5GS assistance information from AIML NF in the same way as Nnef_FLAssistanceInfo_Subscribe/Unsubscribe/Notify. For example, the AI/ML Application Server may also receive Assistance Information by transmitting a request message to AIML NF/NEF, subscribing to these requests and receiving Notification Service from AIML NF/NEF.

For reference, in various examples of the disclosure of the present specification, AIML NF may be NEF or standalone NF. For example, if the AIML NF is a standalone NF, the NEF may exist as a separate NF instead of providing the AIML NF function. In this case, the AF may request 5GS assistance information from AIML NF through NEF or directly request 5GS assistance information from AIML NF. For reference, in various examples of the disclosure of the present specification, AF may be AS.

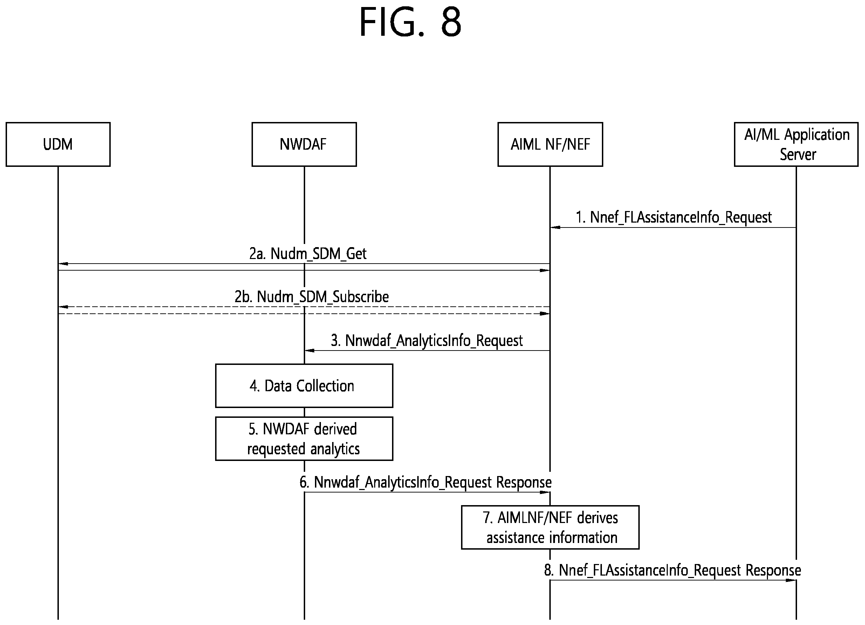

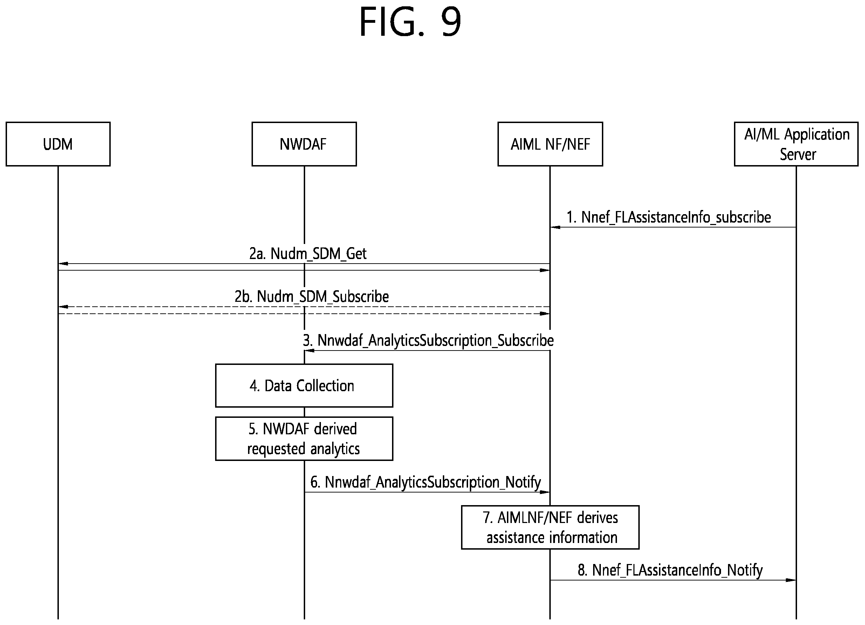

Hereinafter, a first example of providing 5GS assistance information will be described with reference to the example of FIG. 8, and a second example of providing 5GS assistance information will be described with reference to the example of FIG. 9.

As an example, the first example shown in the example of FIG. 8 may be an example of a procedure in which the AI/ML Application Server requests the AIML NF to report 5GS assistance information.

The second example shown in the example of FIG. 9 may be an example in which the AI/ML application server requests 5GS assistance information from the AIML NF in a manner such as Nnef_FLAssistanceInfo_Subscribe/Unsubscribe/Notify.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 8** **shows a first example of providing 5GS assistance information according to an embodiment of the disclosure of the present specification.**

FIG. 8 shows an example of providing 5GS assistance information. 5GS (e.g., including UDM, NWDAF, AIML NF/NEF) may provide 5GS assistance information to AI/ML AS related to FL operation.
1. AI/ML Application Server (AS) may transmit a request message requesting assistance information to AIML NF/NEF. For example, the AI/ML AS may request 5G assistance information as a specific condition for FL operation by calling Nnef_FLAssistanceInfo_Request. The AI/ML application server may request FL assistance information for the UE list included in the request. In addition, the UE list may indicate that the UE included in this list has been approved by the AI/ML application server (application side) for FL operation.

The input parameter of the Nnef_FLAssistanceInfo_Request service operation may include at least one or more of the following examples:
- AF Identifier
- UE List (including GPSIs, External Group ID, or IP addresses)
- AF-Service-Identifier
- External Application Identifier
- QoS Referencek
- Whether to request the list of candidate UEs
- Time when the assistance information is needed (the time that the AI/ML AS wants to receive time assistance information)
- Expected FL operation time duration (e.g. Expected time duration by AI/ML Application Server based on the training information such as training model and data size). For example, this information may be an estimated time taken to perform an FL operation (training).
- Preferred FL operation time periods (The time period that the AI/ML Application Server want to perform FL operation). For example, this information may mean a time period in which FL operation is desired.
- Whether to request the recommended FL operation time periods
- Traffic volume for downloading global model and uploading training results
- DNN and S-NSSAI
- Expected UE Moving Trajectory for each UE in the UE list (e.g. A planned path of movement)
- Area of Interest (FL operation for the UEs in the area of interest)
- Minimum number of UEs needed for FL operation

2. AIML NF/NEF may perform UDM and Nudm_SDM_Get service operations, and may perform Nudm_SDM_Subscribe service operations. For example, if the request from AI/ML Application Server is authorized, AIML NF/NEF may determine whether the UEs provided by AI/ML Application Server are authorized by 5GC to support AIML FL operations from UDM by invoking Nudm_SDM_Get service operation. After a successful response is received, AIML NF/NEF can subscribe to subscription data modification notifications using Nudm_SDM_Subscribe.

3. AIML NF/NEF may transmit a request message requesting analytics information to NWDAF.

For example, for a UE authorized for AIML FL operation, AIML NF/NEF may determine appropriate analytics information to derive assistance information. For example, the analytics information may be information such as a list of candidate UEs with a recommended period that can satisfy the request of the AI/ML application server or a recommended area.

AIML NF/NEF may request analytics information from NWDAF to collect the requested UE's analytics information (e.g., UE Communication analytics, UE Mobility analytics, User Data Congestion analytics, QoS Sustainability analytics). If the AI/ML AS does not provide some of the input parameters, the AIML NF/NEF may derive the input parameters based on analytics such as local configuration or UE Mobility analytics.

AIML NF/NEF may perform subscription instead of making a request for one-time reporting to NWDAF.

4. NWDAF may collect data about the requested Analytics ID. For reference, TS 23.288 V17.3.0 may be referred to for the operation of NWDAF.

5. NWDAF may derive the requested analytics. For reference, TS 23.288 V17.3.0 may be referred to for the operation of NWDAF.

AIML NF may collect one or more of the following Analytics information/data through NWDAF to process requests from AI/ML AS. In addition to the analytics described below, AIML NF can receive various analytics (e.g. NF Load analytics, Network Performance analytics, etc.) described in TS 23.288 V17.3.0 from NWDAF and use it to process requests from AI/ML Application Server. Analytics referred to herein may be understood to include analytics to be newly defined in the future as well as those previously defined in TS 23.288.

For example, AIML NF may collect one or more of the following Analytics information/data through NWDAF to process requests from AI/ML AS:
- UE Mobility Analytics: Through UE Mobility Analytics, NWDAF can make historical statistics and predictions about the mobility of UEs. AI/ML Application Server may request Assistance Information for UE in a specific region and preferred FL operation time zone. In this case, AIML NF/NEF may use UE Mobility Analytics information to consider UEs that will be in a specific area in a preferred time period as UE candidates. For reference, UE Mobility Analytics information may be considered together with other analytics information, for example, User Data Congestion Analytics or QoS Sustainability Analytics. Through this, AIML NF / NEF does not include, as a candidate UE, a UE that is in a congestion area or an area that does not satisfy QoS in the time period to perform the FL operation, the AIML NF/NEF may not include a corresponding area (e.g., a congestion area or an area that does not satisfy QoS) in the FL candidate area.
- UE Communication Analytics: Through UE Communication Analytics, NWDAF can make historical statistics on the communication patterns of UEs and make predictions about the future. Based on this information, the AIML NF may select a time zone in which the UE's communication volume is low from among the time zones in which the AI/ML Application Server prefers FL operation. AIML NF considers the selected time zone, AI / ML FL operation can select a UE that minimizes the impact on other UE applications (e.g., other applications used by the same UE) as UE candidates for AI / ML FL operation.
- User Data Congestion Analytics: Through User Data Congestion Analytics, NWDAF can predict the future and historical statistics on congestion situations that a specific region or specific user may experience.

Through this information, for UEs requested by AI/ML Application Server, AIML NF, can select candidate UEs in consideration of UE mobility analytics and UEs in low-congestion time zones and regions with low congestion among the time zones that AI/ML Application Server prefers FL operation.
- QoS Sustainability Analytics: Through QoS Sustainability Analytics, it is possible to predict past statistics on QoS satisfaction-related changes in a specific area of the Cell/TA (Tracking Area) unit or predict future QoS satisfaction-related changes. The AI/ML Application Server may request assistance information for a UE in a specific region, and may also request QoS information for FL operation. In this case, AIML NF may predict QoS changes in the corresponding region, and select a time zone that can support the QoS requested by the AI/ML Application Server and UE (or UEs that will be located in the area utilizing UE mobility analytics) located in the corresponding region.

In the various examples described above, the description of the use for each Analytics ID is only an example. Accordingly, the scope of the disclosure of the present specification is not limited by the names and descriptions described above, and AIML NF may utilize various analytics.

6. A NWDAF may transmit a response message to AIML NF/NEF. For example, in response to the request message received from the AIML NF/NEF in step 3 above, the NWDAF may transmit a response message to the AIML NF/NEF. For example, the NWDAF may provide an analytics response message to the AIML NF/NEF. The analytics response message may include, for example, various analytics information described in step 5.

7. An AIML NF/NEF may derive assistance information. For example, the AIML NF/NEF may collect all analytics information from the NWDAF and derive supporting information that can satisfy requests from the AI/ML application servers. For example, the AIML NF/NEF may derive assistance information by considering, for example, QoS, user data congestion, UE mobility and preferred FL time period for FL operation, and the like.

8. An AIML NF/NEF may send a response message to An AI/ML AS. For example, the AIML NF/NEF may transmit a response message including the derived assistance information to the AI/ML AS. For example, the response message may be a message based on an Nnef_FLAssitanceInfo_Request Response service operation.

Hereinafter, the output parameter of the Nnef_FLAssitanceInfo_Request Response service operation may include a set of 5GS assistance information requested by the AI/ML AS.

The set of 5GS assistance information may include, for example, at least one or more of the following information:
- List of candidate UEs for FL operation;
- Recommended time period to perform FL operation. For reference, the recommended FL operating times/times may be included with or instead of this information; and/or
- Recommended area for FL operation

For reference, the list of candidate UEs for the recommended FL operation may vary according to the recommended time interval and/or the recommended area for the FL operation.

If "time when the assistance information is needed" is provided in step 1, the AIML NF/NEF may consider "time when the assistance information is needed" when responding to the AI/ML application server.

An AIML NF/NEF can provide multiple recommended time zones to an AI/ML AS, the list of Candidate UEs may be different for each time zone. At the request of the AI/ML Application Server, the AIML NF/NEF may provide recommended local information along with the recommended time zone. Alternatively, the AIML NF/NEF may independently provide each of a recommended time zone, a candidate UE, and a recommended region.

Based on this information provided by an AIML NF/NEF, then, the AI/ML Application Server may determine the final FL member selection and FL operation start time.

Based on the received the 5GS assistance information, the AI/ML Application Server can select and manage the group of UEs, and determine the start time for FL operation.

Thereafter, the AI/ML AS may select a member for the FL operation based on the assistance information received from the 5GC. Also, the AI/ML AS may request assistance information again before performing the FL operation based on the received assistance information (eg, Lists of candidate UEs). When the AI/ML AS requests again, the 5GC may provide assistance information again based on the latest information.

Hereinafter, a procedure for the AI/ML application server to request 5GS assistance information from the AIML NF in the same manner as Nnef_FLAssistanceInfo_Subscribe/Unsubscribe/Notify will be described with reference to the example of FIG. 9. For reference, the second example of providing 5GS assistance information shown in FIG. 9 below describes, an example using a method such as Nnef_FLAssistanceInfo_Subscribe/Unsubscribe/Notify, unlike the example of FIG. 8 using the service operation through Nnef_FLAssistanceInfo_Request and its response. Specifically, in the example of FIG. 9, shows the procedure on which the AI/ML AS subscribes to the assistance information requested by AIML NF/NEF, the AI/ML AS receives the Notification Service, and the AI/ML AS receives Assistance Information.

The example of FIG. 9 is generally similar to the procedure for receiving the Nnef_FLAssistanceInfo_Request and its response described in the example of FIG. 8, in the following description, an example of FIG. 9 will be described with a focus on differences between FIGS. 8 and 9. In the example of FIG. 9, the AI/ML Application Server may subscribe to AIML NF/NEF to receive Assistance Information and manage the corresponding subscription. Hereinafter, for the description omitted in the example of FIG. 9, the contents described in the example of FIG. 8 may similarly applied.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 9** **shows a second example of providing 5GS assistance information according to an embodiment of the disclosure of the present specification.**

FIG. 9 shows an example of providing 5GS assistance information. In the example of FIG. 9, Nnef_FLAssistanceInfo_Subscribe/Notify may be used.

Hereinafter, the example of FIG. 9 will be described with a focus on the difference between the example of FIG. 9 and the example of FIG. 8.
1. An AI/ML AS may transmit a subscribe request message to An AIML NF/NEF to request assistance information. For example, the AI/ML AS may transmit a subscribe message including information on assistance information request and Notification Target Address (+ Notification Correlation ID) to the AIML NF/NEF. For example, the AI/ML AS may transmit information on the assistance information request and Notification Target Address (+ Notification Correlation ID) through Nnef_FLAssistanceInfo_Subscribe. Then, the AI/ML AS may subscribe to receive notification of assistance information from the AIML NF/NEF. The AIML NF/NEF may transmit Subscription Correlation for the corresponding Subscription to the AI/ML AS in response to Subscribe. In addition, the AI/ML AS may deliver a condition for receiving notification of Assistance Information to the AIML NF/NEF (Whether it is one-time reporting, continuous reporting with a period, etc.). Then, the AIML NF/NEF may notify the Assistance Information to the AI/ML AS according to the received condition.

For reference, steps 2a, 2b, 4, 5, and 7 may be performed in the same manner as in the example of FIG. 8.

3. The AIML NF/NEF may transmit a subscription message to receive Analytics information from NWDAF. For example, based on the request of the AI/ML Application Server, the AIML NF/NEF may perform a subscription to receive Analytics information from the NWDAF.

6. The AIML NF/NEF may receive Analytics information Notify from the NWDAF and collect analytics information. Step 6 may occur multiple times.

8. The AIML NF/NEF may transmit a Notification message including assistance information to the AI/ML AS. The AIML NF/NEF may transmit Assistance Information that satisfies the request of the AI/ML Application Server to the AI/ML AS through Notification message.

When Subscribe is performed, Subscription Correlation ID is additionally received from the AIML NF/NEF, and the corresponding subscription is managed through this. Here, the Subscription Correlation ID may be an ID for Subscribe between the AIML AS and the AIML NF/NEF. The AI/ML AS and the AIML NF/NEF can manage the same subscription with Subscription Correlation ID. The AIML NF/NEF may allocate a Subscription Correlation ID and deliver the Subscription Correlation ID to the AIML AS.

There may be a case in which an update of an existing request is required before the AI/ML AS receives assistance information (eg, due to a change in UE List, preferred FL time, etc.). In this case, the AI/ML AS may subscribe to the AIML NF/NEF by sending Nnef_FLAssistanceInfo_Subscribe including the existing Subscription Correlation ID and the updated request to the AIML NF/NEF. Then, the AIML NF/NEF may know that Nnef_FLAssistanceInfo_Subscribe is an update to an existing subscription, and can collect Assistance Information for FL by reflecting the updated request and deliver it to the AI/ML AS.

In the case of FL operation, repeated training is required. Therefore, even after the AI/ML AS receives assistance information, the AI/ML AS may request similar assistance information. In this case, the AI/ML AS may continue to receive additional assistance information by using the existing subscription information for AIML NF/NEF and updating the necessary requests through Nnef_FLAssistanceInfo_Subscribe. When the corresponding subscription for AIML NF/NEF is no longer needed, the AI/ML AS may delete the existing subscription for AIML NF/NEF by sending an Nnef_FLAssistanceInfo_Unsubscribe message including a Subscription Correlation ID.

The AI/ML Application Server may have multiple global models that need to be updated through FL operation. The AI/ML Application Server manages the conditions (region, FL time, QoS, etc.) necessary for selecting FL members for each model based on each subscription, the AI/ML Application Server can efficiently manage assistance information for the FL operation.

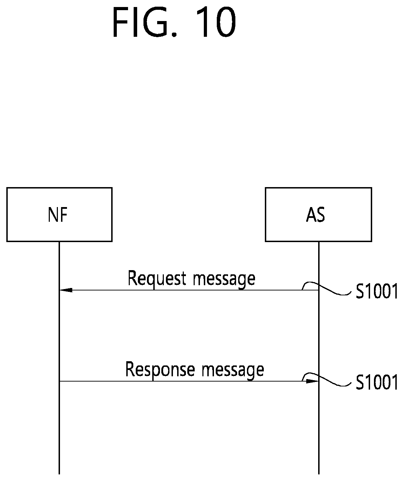

An example in which the operations described in various examples of the disclosure of the present specification are performed will be described with reference to FIG. 10 .

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 10** **shows an example of an operation according to an embodiment of the disclosure of the present specification.**

In the example of FIG. 10, the AS may be an AI/ML AS. NF may be AIML NF/NEF. The example of FIG. 10 is an example in which the operations described in various examples of the disclosure of the present specification are performed, and the scope of the disclosure of the present disclosure is not limited by FIG. 10. For example, the AS may perform the operations of the AS described in the disclosure of this specification, even if the operations are not shown in FIG. 10. Likewise, AF may perform the operations of AIML NF/NEF described in the disclosure of this specification, even if the operations are not shown in FIG. 10.

In step S1001, the AS may transmit a request message for requesting assistance information to the NF. For example, the request message may include one or more of information on whether to request a list of candidate UEs, time information related to FL operation, and/or information on the number of UEs for FL operation. For example, the request message may be an Nnef_FLAssistanceInfo_Request message or an Nnef_FLAssistanceInfo_Subscribe message.

For example, the request message may include one or more of the following information:
- AF Identifier
- UE List (including GPSIs, External Group ID, or IP addresses)
- AF-Service-Identifier
- External Application Identifier
- QoS Reference
- Whether to request the list of candidate UEs
- Time when the assistance information is needed (the time that the AI/ML AS wants to receive time assistance information)
- Expected FL operation time duration (e.g. Expected time duration by AI/ML Application Server based on the training information such as training model and data size). For example, this information may be an estimated time taken to perform an FL operation (training).
- Preferred FL operation time periods (The time period that the AI/ML Application Server want to perform FL operation). For example, this information may mean a time period in which FL operation is desired.
- Whether to request the recommended FL operation time periods
- Traffic volume for downloading global model and uploading training results
- DNN and S-NSSAI
- Expected UE Moving Trajectory for each UE in the UE list (e.g. A planned path of movement)
- Area of Interest (FL operation for the UEs in the area of interest)
- Minimum number of UEs needed for FL operation

Upon receiving the request message, the NF may request analytics from the NWDAF. The NWDAF may perform Analytics described in various examples of the disclosure of this specification at the request of the NF. And, the NWDAF may provide analytics information to the NF. Then, based on the analytics information, the NF may derive assistance information according to the request of the AS.

In step S1002, the NF may transmit a response message including assistance information to the AS. The assistance information included in the response message may be assistance information derived by the NF. The derived assistance information may include, for example, information on one or more of recommendation information for FL operation and/or a list of the candidate UEs.

For example, the derived assistance information may include at least one or more of the following information:
- List of candidate UEs for FL operation;
- Recommended time period to perform FL operation. For reference, the recommended FL operating times/times may be included with or instead of this information; and/or
- Recommended area for FL operation

The AS may perform an FL operation based on the derived assistance information. For example, the AS may select a UE to perform the FL operation based on the derived assistance information. Therefore the AS determines a time to perform the FL operation based on the derived assistance information.

As described in various examples of the disclosure of the present specification, unlike the prior art, there may be the following effects on services, entities and interfaces. For example, the UDM may use the new subscription information that the UE is authorized for the 5G AI/ML FL operation. For example, for AIML NF/NEF, a new NF may be added to support the application AI/ML FL operation. For example, the AIML NF/NEF may perform a new service operation that supports the application AI/ML FL operation. For example, the AI/ML AS may support a new service operation provided by the AIML NF/NEF.

As described in the disclosure of the present specification, the FL operation in the 5GS can be effectively supported. For example, The AI/ML AS may request information necessary for the FL operation from the 5GS. The AIML NF/NEF of 5GS collects information in 5GS based on information requested by the AS, and the AI/ML Application Server can deliver necessary information. Through this, the AS may select a UE to participate in the FL using the received information and determine the FL execution time. In addition, the AS may request network resources for the FL to the 5GS for the selected UEs.

As described in the disclosure of this specification, AIML NF, which is a new NF supported by the NEF and used for external exposure, may be introduced to support the 5G AIML service. For example, such an NF may receive a request from an AF (i.e., AI/ML Application Server) and respond by sending 5GS assistance information for FL operation.

As described in the disclosure of this specification, a dedicated NEF may be deployed to provide only the AIML NF function. For example, AIML FL operation specific functions/APIs and NEF functions/APIs designated for function exposure to AI/ML application servers may be supported.

As described in the disclosure of the present specification, the AI/ML Application Server may request assistance information for an FL member having a specific condition for FL operation. For example, the assistance information may include at least one of QoS reference, geographic area, minimum number of UEs for FL operation, preferred FL time period, and the like. The AI/ML application server may indicate whether it wants to receive a list of candidate UEs for FL operation. The AI/ML application server may also indicate a preferred duration for AI/ML FL operation. For example, some FL operations may need to be performed for a specific time period or some FL operations may not need to be performed immediately. In this case, AIML NF/NEF considers the preferred time zone and predicts network conditions such as user data congestion time, AIML NF / NEF may derive a recommended time period (recommended time period) for the FL operation.

As described in the disclosure of the present specification, the AI/ML AS may indicate when the server intends to receive assistance information by providing "time when the assistance information is needed". In this case, AIML NF/NEF can provide up-to-date assistance information by collecting information from 5GC before the specified time.

As described in the disclosure of the present specification, AIML NF/NEF may interact with other NFs such as NWDAF and UDM to process requests of AI/ML Application Server. AIML NF/NEF may provide assistance information for FL operation requested by AI/ML AS.

As described in the disclosure of this specification, AIML NF/NEF may call Nudm_SDM_Get service operation to determine whether the UE is authorized by 5GC to support AIML FL operation in UDM.

As described in the disclosure of this specification, AIML NF/NEF may collect information and analytics related to UE for FL operation. AIML NF/NEF may request analytics information provided by NWDAF. (e.g. UE mobility analytics, UE communication analytics, use of data congestion analytics, QoS sustainability analytics)

As described in the disclosure of this specification, based on the collected information, AIML NF/NEF may generate assistance information (e.g., candidate UE list for recommended period) for FL operation and response to AI/ML AS.

As described in the disclosure of this specification, a new Nnef service operation for supporting the AIML FL operation may be supported.

As described in the disclosure of this specification, the AI/ML Application Server may request 5GS assistance information from the AIML NF in the same manner as Nnef_FLAssistanceInfo_Subscribe/Unsubscribe/Notify. For example, AI/ML Application Server sends a request message to AIML NF/NEF, the AI/ML Application Server can also receive Assistance Information by subscribing to these requests and receiving Notification Service from AIML NF/NEF.

For reference, the operation of a network node (e.g., UDM, NWDAF, AIML NF, NEF, AIML NF/NEF, AS, AI/ML AS etc.) or base station (e.g., NG-RAN, gNB, gNB (NB-IoT), gNB (NR) eNB, RAN, etc.) described herein may be implemented by the apparatus of FIGS. 1 to 3 to be described below. For example, a network node or a base station may be the first device 100a of FIG.1 or the second device 100b of FIG.1. For example, the operation of a network node or base station described herein may be processed by one or more processors 102 or 202. The operation of the terminal described herein may be stored in one or more memories 104 or 204 in the form of an instruction/program (e.g. instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the disclosure of this specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the scope of protection and the several examples have been described, but the scope of protection is solely defined by the appended claims. The invention is defined by independent method claim 1 and apparatus claim 9. Advantageous features are set out in the dependent claims 2-8.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

## Claims

1. A method for performing communication related to Federated Learning, FL, the method performed by an Application Server, AS, and comprising:
transmitting (S1001) a request message for requesting assistance information to a network function, NF, node;
receiving (S1002) a response message including the derived assistance information from the NF node,
wherein the request message includes one or more of recommendation information on whether to request a list of candidate UEs, time recommendation information related to FL operation, and/or recommendation information on the number of UEs for FL operation, and
wherein the derived assistance information includes at least one of the recommendation information for the FL operation and/or the list of the candidate UEs;
determining a time to perform an FL operation based on the derived assistance information; and
performing the FL operation based on the derived assistance information.

2. The method of claim 1,
wherein the request message includes one or more of the recommendation information on whether to request the list of candidate UEs, the time recommendation information related to the FL operation, the recommendation information on the number of UEs for the FL operation, recommendation information on the time required for assistance information, recommendation information on whether to request recommendation of a time zone for the FL operation, and/or recommendation information on an amount of traffic for downloading a global model and uploading a training result.

3. The method of claim 1 or 2,
wherein the request message is used by the NF node to request analytics from a Network Data Analytics Function, NWDAF, to derive the assistance information.

4. The method of any one preceding claim,
wherein the recommendation information includes one or more of information on a time for recommending the FL operation, and/or information on a recommended area for the FL operation.

5. The method of any one preceding claim, wherein the performing the FL operation further comprising:
selecting a UE for performing FL operation based on the derived assistance information.

6. The method of any one preceding claim,
wherein the NF node is a Network Exposure Function, NEF, node or an AIML NF node to support Artificial Intelligence, AI, and/or Machine Learning, ML.

7. The method of any one preceding claim,
wherein the request message is a request message requesting the NF node to report the assistance information, or a subscribe message requesting the NF node to notify the assistance information when a specific event occurs.

8. The method of any one preceding claim,
wherein the derived assistance information includes one or more of information on recommended time zones for the FL operation and a list of recommended UEs for the FL operation for each of the one or more recommended time zones.

9. An Application Server, AS, for performing communication related to Federated Learning, FL, the AS comprising:
at least one processor; and
at least one memory for storing instructions and operably electrically connectable with the at least one processor;
wherein the operations performed based on the execution of the instructions by the at least one processor include:
transmitting a request message for requesting assistance information to a network function, NF, node; and
receiving a response message including the derived assistance information from the NF node,
wherein the request message includes one or more of recommendation information on whether to request a list of candidate UEs, time recommendation information related to FL operation, and/or recommendation information on the number of UEs for FL operation, and
wherein the derived assistance information includes at least one of the recommendation information for the FL operation and/or the list of the candidate UEs;
determining a time to perform an FL operation based on the derived assistance information; and
performing the FL operation based on the derived assistance information.

## Patentansprüche

1. Verfahren zum Durchführen einer Kommunikation im Zusammenhang mit Federated Learning, FL, wobei das Verfahren von einem Application Server, AS, durchgeführt wird und Folgendes umfasst:
Übertragen (S1001) einer Anforderungsnachricht zum Anfordern von Unterstützungsinformationen an einen Netzwerkfunktions-, NF-, Knoten;
Empfangen (S1002) einer Antwortnachricht, die die abgeleiteten Unterstützungsinformationen enthält, von dem NF-Knoten,
wobei die Anforderungsnachricht eine oder mehrere der folgenden Informationen enthält: Empfehlungsinformationen darüber, ob eine Liste von Kandidaten-UEs angefordert werden soll, Zeitempfehlungsinformationen im Zusammenhang mit einem FL-Vorgang und/oder Empfehlungsinformationen über die Anzahl der UEs für einen FL-Vorgang, und
wobei die abgeleiteten Unterstützungsinformationen mindestens eine der Empfehlungsinformationen für den FL-Vorgang und/oder die Liste der Kandidaten-UEs enthalten;
Bestimmen eines Zeitpunkts zum Durchführen eines FL-Vorgangs auf der Grundlage der abgeleiteten Unterstützungsinformationen; und
Durchführen des FL-Vorgangs auf der Grundlage der abgeleiteten Unterstützungsinformationen.

2. Verfahren nach Anspruch 1,
wobei die Anforderungsnachricht eine oder mehrere der folgenden Informationen enthält: die Empfehlungsinformationen darüber, ob die Liste der Kandidaten-UEs angefordert werden soll, die Zeitempfehlungsinformationen im Zusammenhang mit dem FL-Vorgang, die Empfehlungsinformationen über die Anzahl der UEs für den FL-Vorgang, Empfehlungsinformationen zur für die Unterstützungsinformationen erforderlichen Zeit, Empfehlungsinformationen darüber, ob eine Empfehlung für eine Zeitzone für den FL-Vorgang angefordert werden soll, und/oder Empfehlungsinformationen zu einem Datenverkehrsaufkommen für ein Herunterladen eines globalen Modells und ein Hochladen eines Trainingsergebnisses.

3. Verfahren nach Anspruch 1 oder 2,
wobei die Anforderungsnachricht vom NF-Knoten verwendet wird, um Analysen von einer Netzwerkdaten-Analysefunktion, NWDAF, anzufordern, um die Unterstützungsinformationen abzuleiten.

4. Verfahren nach einem der vorstehenden Ansprüche,
wobei die Empfehlungsinformationen eine oder mehrere der folgenden Informationen umfassen: Informationen über einen Zeitpunkt für ein Empfehlen des FL-Vorgangs und/oder Informationen über einen empfohlenen Bereich für den FL-Vorgang.

5. Verfahren nach einem der vorstehenden Ansprüche, wobei das Durchführen des FL-Vorgangs ferner umfasst:
Auswählen eines UE zum Durchführen des FL-Vorgangs auf der Grundlage der abgeleiteten Unterstützungsinformationen.

6. Verfahren nach einem der vorstehenden Ansprüche,
wobei der NF-Knoten ein Network Exposure Function-, NEF-, Knoten oder ein AIML-NF-Knoten zur Unterstützung von künstlicher Intelligenz, AI, und/oder maschinellem Lernen, ML, ist.

7. Verfahren nach einem der vorstehenden Ansprüche,
wobei die Anforderungsnachricht eine Anforderungsnachricht ist, die den NF-Knoten auffordert, die Unterstützungsinformationen zu melden, oder eine Abonnementnachricht, die den NF-Knoten auffordert, die Unterstützungsinformationen zu übermitteln, wenn ein bestimmtes Ereignis eintritt.

8. Verfahren nach einem der vorstehenden Ansprüche,
wobei die abgeleiteten Unterstützungsinformationen eine oder mehrere der folgenden Informationen enthalten: Informationen zu empfohlenen Zeitzonen für den FL-Betrieb und eine Liste empfohlener UEs für den FL-Betrieb für jede der einen oder mehreren empfohlenen Zeitzonen.

9. Application Server, AS, zum Durchführen einer Kommunikation im Zusammenhang mit Federated Learning, FL, wobei der AS umfasst:
mindestens einen Prozessor; und
mindestens einen Speicher zum Speichern von Befehlen, der funktionsfähig elektrisch mit dem mindestens einen Prozessor verbindbar ist;
wobei die auf der Grundlage der Ausführung der Befehle durch den mindestens einen Prozessor durchgeführten Vorgänge Folgendes umfassen:
Übertragen einer Anforderungsnachricht zum Anfordern von Unterstützungsinformationen an einen Netzwerkfunktions-, NF-, Knoten; und
Empfangen einer Antwortnachricht, die die abgeleiteten Unterstützungsinformationen enthält, von dem NF-Knoten,
wobei die Anforderungsnachricht eine oder mehrere der folgenden Informationen enthält: Empfehlungsinformationen darüber, ob eine Liste von Kandidaten-UEs angefordert werden soll, Zeitempfehlungsinformationen im Zusammenhang mit einem FL-Vorgang und/oder Empfehlungsinformationen über die Anzahl der UEs für einen FL-Vorgang, und
wobei die abgeleiteten Unterstützungsinformationen mindestens eine der Empfehlungsinformationen für den FL-Vorgang und/oder die Liste der Kandidaten-UEs enthalten;
Bestimmen eines Zeitpunkts zum Durchführen eines FL-Vorgangs auf der Grundlage der abgeleiteten Unterstützungsinformationen; und
Durchführen des FL-Vorgangs auf der Grundlage der abgeleiteten Unterstützungsinformationen.

## Revendications

1. Procédé permettant d'établir une communication liée à l'apprentissage fédéré, AL, le procédé étant mis en œuvre par un serveur d'applications, SA, et comprenant:
la transmission (S1001) d'un message de requête visant à demander des informations d'aide à un nœud de fonction réseau, NF;
la réception (S1002) d'un message de réponse comprenant des informations d'aide dérivées provenant du nœud NF;
dans lequel le message de requête comprend une ou plusieurs informations parmi des informations de recommandation indiquant s'il convient de demander une liste d'UE candidats, des informations de recommandation de temps relatives à l'opération FL, et/ou des informations de recommandation concernant le nombre d'UE pour l'opération FL, et
dans lequel les informations d'aide dérivées comprennent au moins l'une parmi les informations de recommandation pour l'opération FL et/ou la liste des UE candidats;
la détermination d'un temps pour exécuter l'opération FL en fonction des informations d'aide dérivées; et
la réalisation de l'opération FL en fonction des informations d'aide dérivées.

2. Procédé selon la revendication 1,
dans lequel le message de requête comprend une ou plusieurs parmi les informations de recommandation indiquant s'il faut demander la liste des UE candidats, les informations de recommandation de temps relatives à l'opération FL, les informations de recommandation concernant le nombre d'UE pour l'opération FL, les informations de recommandation concernant le temps nécessaire pour les informations d'aide, les informations de recommandation indiquant s'il faut demander une recommandation de fuseau horaire pour l'opération FL, et/ou les informations de recommandation concernant le volume de trafic nécessaire au téléchargement d'un modèle global et au téléchargement d'un résultat d'entraînement.

3. Procédé selon la revendication 1 ou 2,
dans lequel le message de requête est utilisé par le nœud NF pour demander des analyses à une fonction d'analyse de données de réseau, NWDAF, pour obtenir les informations d'aide.

4. Procédé selon une quelconque revendication précédente,
dans lequel les informations de recommandation comprennent l'une ou plusieurs parmi les informations de temps pour recommander l'opération FL et/ou les informations sur la zone recommandée pour l'opération FL.

5. Procédé selon une quelconque revendication précédente, dans lequel la réalisation de l'opération FL comprend en outre:
la sélection d'un UE pour réaliser l'opération FL en fonction des informations d'aide dérivées.

6. Procédé selon une quelconque revendication précédente,
dans lequel le nœud NF est un nœud de fonction d'exposition de réseau, NEF, ou un nœud AIML NF pour prendre en charge l'intelligence artificielle, IA, et/ou l'apprentissage automatique, ML.

7. Procédé selon une quelconque revendication précédente,
dans lequel le message de requête est un message de requête demandant au nœud NF de communiquer les informations d'aide, ou un message d'abonnement demandant au noud NF de notifier les informations d'aide lorsqu'un événement spécifique se produit.

8. Procédé selon une quelconque revendication précédente,
dans lequel les informations d'aide dérivées comprennent une ou plusieurs parmi les informations concernant les fuseaux horaires pour l'opération FL et une liste d'UE recommandés pour l'opération FL pour chacun du ou des fuseaux horaires recommandés.

9. Serveur d'applications, AS, pour établir une communication en lien avec l'apprentissage fédéré, LF, l'AS comprenant:
au moins un processeur ; et
au moins une mémoire pour stocker des instructions et pouvant être connectée électriquement de manière fonctionnelle à l'au moins un processeur;
dans lequel les opérations réalisées sur la base de l'exécution des instruction par l'au moins un processeur comprennent:
la transmission d'un message de requête visant à demander des informations d'aide à un nœud de fonction réseau, NF; et
la réception d'un message de réponse comprenant des informations d'aide dérivées provenant du nœud NF,
dans lequel le message de requête comprend une ou plusieurs informations parmi des informations de recommandation indiquant s'il convient de demander une liste d'UE candidats, des informations de recommandation de temps relatives à l'opération FL, et/ou des informations de recommandation concernant le nombre d'UE pour l'opération FL, et
dans lequel les informations d'aide dérivées comprennent au moins l'une parmi les informations de recommandation pour l'opération FL et/ou la liste des UE candidats;
la détermination d'un temps pour exécuter l'opération FL en fonction des informations d'aide dérivées; et
la réalisation de l'opération FL en fonction des informations d'aide dérivées.
